# EUROPEAN PATENT SPECIFICATION

(11) **EP 2 777 085 B1**
(45) Date of publication and mention of the grant of the patent: **22.01.2020**
(21) Application number: 12799672.6
(22) Date of filing: 06.11.2012
(51) Int. Cl.: H01M 2/10, H01M 10/04, H01M 10/6554, H01M 10/0585, H01M 10/625, H01M 10/647

(54) **ONE-PIECE HOUSING WITH PLUGS FOR PRISMATIC CELL ASSEMBLY**
EINTEILIGES GEHÄUSE MIT STECKERN FÜR EINE PRISMATISCHE ZELLENANORDNUNG
LOGEMENT MONOBLOC À BOUCHONS POUR ENSEMBLE DE CELLULES PRISMATIQUES

(30) Priority: 07.11.2011 US 201161556747 P; 31.10.2012 US 201213665613
(43) Date of publication of application: 17.09.2014
(73) Proprietor: CPS Technology Holdings LLC, New York, New York 10281 (US)
(72) Inventor: MACK, Robert J., Glendale, Wisconsin 53209 (US)
(74) Representative: Trinks, Ole
(86) International application number: PCT/US2012/063693
(87) International publication number: WO 2013/070593

(56) References cited:
- EP-A1- 0 989 618
- DE-A1-102010 013 034
- GB-A- 346 862
- US-A1- 2011 027 630

## Description

### FIELD OF THE DISCLOSURE

The present disclosure relates generally to the field of batteries and battery modules. More specifically, the present disclosure relates to a housing system for battery modules that may be used particularly in vehicular contexts, as well as other energy storage/expending applications.

### BACKGROUND

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Vehicles using electric power for all or a portion of their motive power may provide numerous advantages as compared to traditional vehicles powered by internal combustion engines. For example, vehicles using electric power may produce fewer pollutants and may exhibit greater fuel efficiency. In some cases, vehicles using electric power may eliminate the use of gasoline entirely and derive the entirety of their motive force from electric power. As technology continues to evolve, there is a need to provide improved power sources, particularly battery modules, for such vehicles. For example, it is desirable to minimize the complexity of battery modules to decrease the costs associated with manufacturing. It is also desirable to minimize the weight and size of the battery modules to keep the vehicle lightweight and to provide space for additional vehicle components and/or storage.

Vehicles using electric power for at least a portion of their motive force may derive their electric power from multiple individual prismatic battery cells packaged into battery modules. Unlike the cylindrical containers used to house typical batteries, prismatic containers may have a degree of structural flexibility due to the differences in geometry of the cylinder and the rectangular prism. Such flexibility poses a problem in that the prismatic cells may undergo swelling due to the buildup of pressure within the cell. Swelling may result in shifting of the internal components of the prismatic cells. For example, windings within the electrode of the prismatic cell may separate, degrading the chemical properties of the prismatic cell. Further, uncontrolled swelling of the prismatic cells may drastically decrease their efficiency and product life. Accordingly, it would be desirable to provide compression to the prismatic cells to protect their chemical integrity, and thus their efficiency and product life.

Such a conventional battery module is shown, e.g., in document US 2011/027630 A1, which relates to a battery module comprising a housing system and several prismatic electrochemical cells. The housing comprises a casing forming a generally rectangular internal space, having opposing walls, holes extending through each of said opposing walls and plugs having a head portion and a body portion, wherein each of the body portions extends through each of the holes on the opposing walls and contacts one of the cells at the end of the cell stack. The body portion of a bolt has a thread to fix its position and provide a compressive force on the battery cells.

EP 0 989 618 A1 relates to a battery cell housing for valve-regulated, lead-acid batteries, wherein the housing comprises a base, vertical side walls attached to the base and a top wall defining a single, shelfless battery compartment. A compression member is positioned in the battery compartment beneath the top wall for movement between the side walls so as to compress a stack of separately cased battery cells stacked in a horizontal position in the battery compartment. Internally threaded members are attached to the top wall, each in alignment with an associated opening in the top wall. A compression bolt extends through each top wall opening and contacts the compression member while threadedly engaging the associated internally threaded member.

### SUMMARY

The invention is defined by the subject-matter of independent claims 1 and 11. Advantageous embodiments are defined by the subject-matter of the dependent claims.

### DRAWINGS

Various aspects of this disclosure may be better understood upon reading the following detailed description and upon reference to the drawings in which:
FIG. 1 is a perspective view of an embodiment of a vehicle having a battery module contributing all or a portion of the motive power for the vehicle;
FIG. 2 illustrates a cutaway schematic view of an embodiment of the vehicle of FIG. 1 provided in the form of a hybrid electric vehicle;
FIG. 3 is a perspective view of an embodiment of the housing system enclosing multiple prismatic cells;
FIG. 4 is an exploded view of the embodiment of the housing system of FIG. 3, having a cooling system;
FIG. 5 is an exploded view of the embodiment of the housing system of FIG. 3, having compression plates;
FIG. 6 is a top view of a not-claimed embodiment of the housing system, showing the housing system having one plug;
FIG. 7 is a top view of an embodiment of the housing system, showing the housing system having two plugs;
FIG. 8 is a perspective view of an embodiment of a plug, having a ratcheting mechanism as the detention mechanism according to the invention;
FIG. 9A is a perspective view of a not-claimed embodiment of a plug, having a ribbed structure with a snap ring as the detention mechanism;
FIG. 9B is a top view of a not-claimed embodiment of a casing incorporating the ribbed plug and snap ring; and
FIG. 10 is a side view of an embodiment of a plug, having a spring-loaded feature.

### DETAILED DESCRIPTION

The term "xEV" is defined herein to include all of the following vehicles, or any variations or combinations thereof, that use electric power for all or a portion of their vehicular motive force. As will be appreciated by those skilled in the art, hybrid electric vehicles (HEVs) combine an internal combustion engine propulsion system and a battery-powered electric propulsion system. The term HEV may include any variation of a hybrid electric vehicle, such as micro-hybrid and mild hybrid systems, which disable the internal combustion engine when the vehicle is idling and utilize a battery system to continue powering the air conditioning unit, radio, or other electronics, as well as to kick-start the engine when propulsion is desired. The mild hybrid system may apply some level of power assist to the internal combustion engine, whereas the micro-hybrid system may not supply power assist to the internal combustion engine. A plug-in electric vehicle (PEV) is any vehicle that can be charged from an external source of electricity, such as wall sockets, and the energy stored in the rechargeable battery packs drives or contributes to drive the wheels. PEVs are a subcategory of electric vehicles that include all-electric or battery electric vehicles (BEVs), plug-in hybrid vehicles (PHEVs), and electric vehicle conversions of hybrid electric vehicles and conventional internal combustion engine vehicles. An electric vehicle (EV) is an all-electric vehicle that uses one or more motors powered by electric energy for its propulsion.

As described in more detail below, disclosed herein are embodiments of battery module housing systems that may be used to compress one or more battery cells and that may be well suited to xEV applications. The cells of the battery module may be retained within a casing using a plug to hold the cells in place with respect to the casing. The plug may apply a force to the cells, placing them in compression within the casing. In addition to holding the cells in place, the compressive force may extend the life of the cells by limiting their ability to swell within the casing. Further, the use of the plug enables the amount of compressive force to be adjusted for a number of cells placed within the housing, despite variances in cell dimensions and tolerances. Furthermore, embodiments of the housing systems provided herein may include a one-piece casing. Particularly, use of a one-piece structure as the casing may create rigidity within the casing, as compared to a multi-piece casing. This may enable the one-piece casing to provide rigidity and compression for the prismatic cells when they swell during operation. Further, use of a one-piece structure reduces the part count of the battery module housing, thereby decreasing the time and cost of manufacturing associated with the battery modules.

The battery modules that include the housing system with the one-piece casing and the plug may be easily configured for use in xEVs. In certain embodiments, the xEV may include at least one battery module, and each battery module may include the housing system having the simplified design. To ensure the casing and the plug of the housing system remain coupled, the casing may have a hole for the plug to feed through, and both the plug and the hole may include detention mechanisms on their interfacing surfaces. As such, the plug may securely couple to the casing and provide the ability to apply an adjustable compressive force to the cells within the housing.

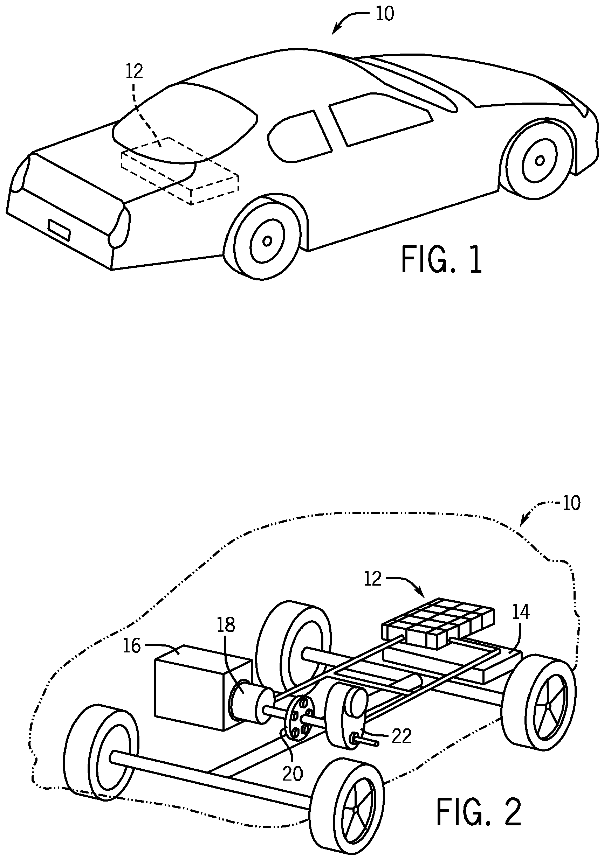

Turning now to the drawings, FIG. 1 is a perspective view of a vehicle 10 in the form of an automobile having a battery module 12 for contributing all or a portion of the motive power for the vehicle 10. The battery module 12 may be constructed from multiple individual prismatic cells and may include one or more housing systems as described above. Although illustrated as an automobile in FIG. 1, the type of the vehicle 10 may be implementation-specific, and, accordingly, may differ in other embodiments, all of which are intended to fall within the scope of the present disclosure. For example, the vehicle 10 may be a truck, bus, industrial vehicle, motorcycle, recreational vehicle, boat, or any other type of vehicle that may benefit from the use of electric power for all or a portion of its propulsion power. For the purposes of the present disclosure, it should be noted that the battery modules 12 and battery module accessories illustrated and described herein are particularly directed to providing and/or storing energy in xEVs. However, embodiments of the battery modules 12 having the housing system may be utilized in other, non-vehicular applications as well.

Further, although the battery module 12 is illustrated in FIG. 1 as being positioned in the trunk or rear of the vehicle 10, according to other embodiments, the location of the battery module 12 may differ. For example, the position of the battery module 12 may be selected based on the available space within the vehicle 10, the desired weight balance of the vehicle 10, the location of other components used with the battery module 12 (e.g., battery management modules, vents or cooling devices, etc.), and a variety of other implementation-specific considerations.

For purposes of discussion, it may be helpful to discuss the battery module 12 with respect to a particular type of xEV, for example, an HEV. FIG. 2 illustrates a cutaway schematic of the vehicle 10 provided in the form of an HEV. In the illustrated embodiment, the battery module 12 is provided toward the rear of the vehicle 10 near a fuel tank 14. The fuel tank 14 supplies fuel to an internal combustion engine 16, which is provided for the instances when the HEV utilizes gasoline power to propel the vehicle 10. An electric motor 18, a power split device 20, and a generator 22 are also provided as part of the vehicle drive system. Such an HEV may be powered or driven by only the battery module 12, by only the engine 16, or by both the battery module 12 and the engine 16.

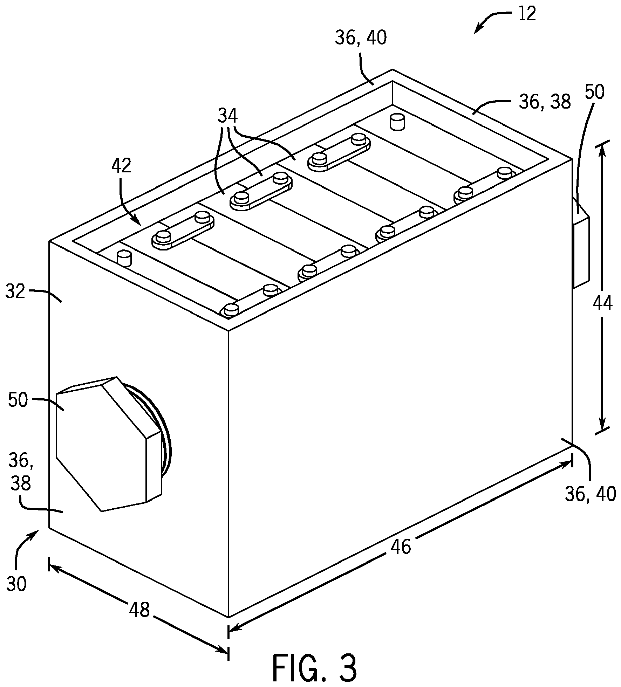

As previously described, each battery module 12 includes a housing system that encloses the cells of the battery module 12. An embodiment of such a housing system 30 is illustrated in FIG. 3. The housing system 30 generally includes an electrically insulating casing 32 that encloses one or more prismatic cells 34. The casing 32 may be designed to surround or enclose any desired number of prismatic cells 34. As can be understood, electrically insulating dividers may be placed between the cells 34 in the case that the casing 32 and/or the cells 34 are polarized. As shown, the casing 32 of the housing system 30 may be constructed from four walls 36 generally arranged as a box without a top or bottom. Of the four walls 36, two end walls 38 may be parallel to one another, and two side walls 40 may be parallel to one another, so that the walls 36 create a rectangular internal space 42 within the casing 32 that accommodates the cells 34. The end walls 38 and side walls 40 may have an equal height 44. However, a length 46 of the side walls 40 may be greater than a length 48 of the end walls 38 to accommodate multiple prismatic cells 34 in a face-to-face arrangement. The lengths 46 and 48 of the walls 36 may be adjusted to accommodate a different number or arrangement of the cells 34.

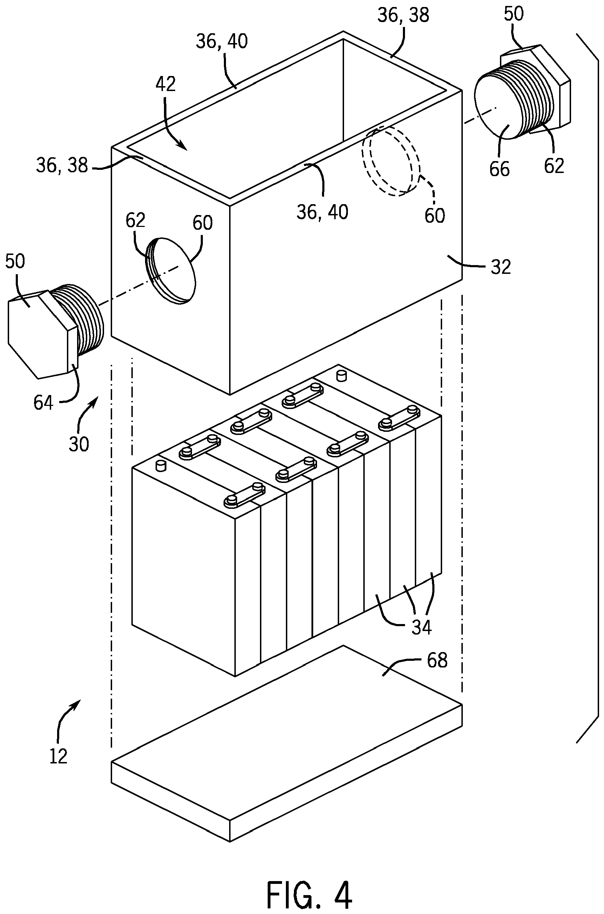

In certain embodiments, the casing 32 may be formed as a single piece. Creating the casing 32 as a single piece may increase the strength of the casing 32, thereby enabling the casing 32 to provide rigidity for the cells 34 as they swell during operation. The structural stability of the single-piece casing 32 may apply compression to the cells 34 as they swell, decreasing the possibility of changing the internal geometry of the cells 34. This may preserve the product life and efficiency of the cells 34. Further, a single-piece casing 32 decreases the part count associated with the housing system 30 and decreases the number of manufacturing steps needed to create the casing 32. For example, the one-piece casing 32 may be created in a single step by injection molding of a thermoplastic material, thereby reducing costs associated with manufacturing for the battery module 12 and making the resulting vehicle 10 more affordable for consumers. The casing 32 may be formed to include a hole (see FIG. 4) in at least one end wall 38 to accommodate a plug 50. The hole may be formed simultaneously with the casing 32 to reduce manufacturing steps/complexity. For example, polyvinyl chloride (PVC) or a similar thermoplastic may be used to form the one-piece casing 32.

To provide a better understanding of how the plug 50 and other components fit within the casing 32, FIG. 4 provides an exploded view of an embodiment of the housing system 30. As previously described, the casing 32 includes holes 60 to house the plugs 50. In the depicted embodiment, each end wall 38 includes the hole 60 at a generally central location. The holes 60 enable the plugs 50 to contact and apply compression to the cells 34. Detention mechanisms 62 on the surface of the holes 60 enable the plugs 50 to securely couple to the holes 60 and translate axially through the holes 60. This axial translation may be used to adjust the location of the plugs 36 within the holes 60, enabling the amount of compressive force applied to the cells 34 to be adjustable. It may be desirable to adjust the amount of compressive force applied to the cells 34 to enable the housing system 30 to accommodate variances within the dimensions of the cells 34. For example, if the casing 32 accommodates eight cells 34 and each cell is manufactured to a tolerance of ±1/16^{th} of an inch (1.5875 mm), there may be up to ½ of an inch (12.7 mm) that the housing system 30 must accommodate. Accordingly, the adjustable compressive force may enable the design of the housing system 30 to be robust with respect to the tolerances and variances of the multiple prismatic cells 34.

Each plug 50 includes a head portion 64 and a body portion 66. The body portion 66 may be inserted into the hole 60 externally to the casing 32. Accordingly, the detention mechanism 62 on the body portion of the plug 50 may mate with the detention mechanism 62 in the hole 60 to couple the plug 50 to the casing 32. Although shown as not-claimed matching threaded surfaces in FIG. 4, the detention mechanism 62 utilizes a ratchet and pawl system according to the invention. In a not-claimed embodiment, the detention mechanism 62 may utilize a rib and snap-fit ring system, or another suitable system. A force and/or torque may be applied to the head portion 64 to translate the plug 50 within the casing 32, resulting in axial movement of the plug 50. As such, the distance that the body portion 66 of the plug 50 extends into the internal space 50 of the casing 32 may be adjustable, thereby enabling the plug 50 to provide adjustable compressive force to the cells 34 within the internal space 50.

The head portion 64 may have a larger cross-section than the body portion 66 and the hole 60 such that it cannot pass through the casing 32. Further, the head portion 64 may have a different geometry than the body portion 66 and the hole 60. For example, the head portion 64 may have a geometry that can withstand the force and/or torque applied to the head portion 64. For example, the head portion 64 of the plugs 50 may be fastened to the casing 32 using an automated system or by hand.

The embodiment of the housing system 30 in FIG. 4 further includes a cooling system 68. Because the casing 32 does not include a bottom piece, the cooling system 68 may have access to, or be in direct contact with, the bottom of the cells 34. Thus, the cooling system 68 may dissipate heat generated by chemical reactions within the cells 34. The use of the cooling system 68 may improve the reliability of the battery module 12 by preventing the cells 34 from overheating.

The cooling system 68 may include a liquid or gas coolant circuit, a cooling plate, a heat sink, a fan, a finned structure, or a combination thereof.

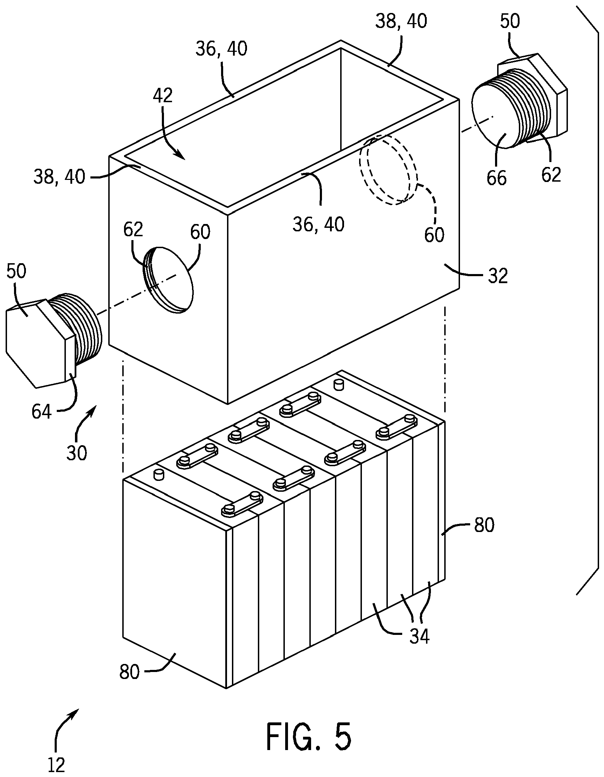

To more evenly distribute the compressive force exerted by the plugs 50, the housing system 30 may include compression plates 80. Accordingly, FIG. 5 depicts the housing system 30 with two compression plates 80. The compression plates 80 may be rigid plastic plates that are placed at each end of the face-to-face cell 34 stack. In this way, the body portion 66 of the plugs 50 may apply force to the compression plates 80 instead of applying force to the cells 34 directly. By applying the force to the rigid compression plates 80 instead of the cells 34, the compressive force from the plug 50 is applied over the entire surface area of the face of the cell 34, thereby reducing the possibility of damaging the cells 34 with the application of a concentrated force. When included in the housing system 30, the compression plates may generally be located where a plug 50 contacts a cell 34 or where a cell 34 contacts the casing 32. The compression plates 80 may be rectangular, circular, triangular, or any other suitable geometry for even force transmission. Particularly, the compression plates 80 may be included in the housing system 30 when even compressive force transmission is a primary goal of the housing system 30, as opposed to reduced part count and/or manufacturing minimization.

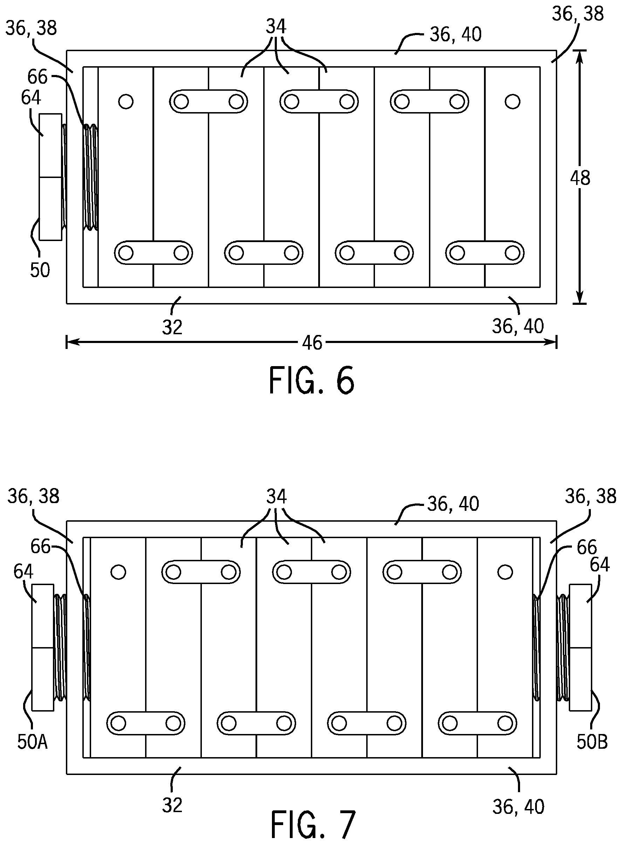

An assembled top-view of the battery module 12 is provided in FIGS. 6 and 7. These views depict how the cells 34 may fit within the components of the housing system 30. For example, the cells 34 may fit tightly within the length 46 from end wall 38 to end wall 38. Within the length 48, the fit between the cells 34 and the casing may be loose enough to allow the cells 34 to be placed into the casing 32 via the open top. In this way, any group of a set number of cells 34 may be housed within a mass-produced version of the casing 32, and slight variances in the dimensions of the cells 34 and/or the casing 32 may not affect how the cells 34 fit within the casing 32. Although not shown, the fit along the length 46 provides the option of including compression plates 80 within the casing 32. As depicted in not-claimed FIG. 6, a single plug 50 applies compressive force to the cells 34 from the end wall 38. However, if it is desirable to provide increased compressive force to the cells 34, two plugs 50A and 50B are used, as shown in FIG. 7. In alternative not-claimed embodiments, multiple holes 60 and plugs 50 may be used at each end wall 38. Accordingly, the plugs 50 may vary in length depending on the number of cells 34 within the housing 32, the presence of compression plates 80 within the housing 32, the variance among cell 34 dimensions, the thickness of the end walls 40, and/or other design considerations. Further, although shown as not-claimed threaded features, the plugs 50 may incorporate different detention mechanisms 62 to fix the plugs 50A and 50B within the holes 60.

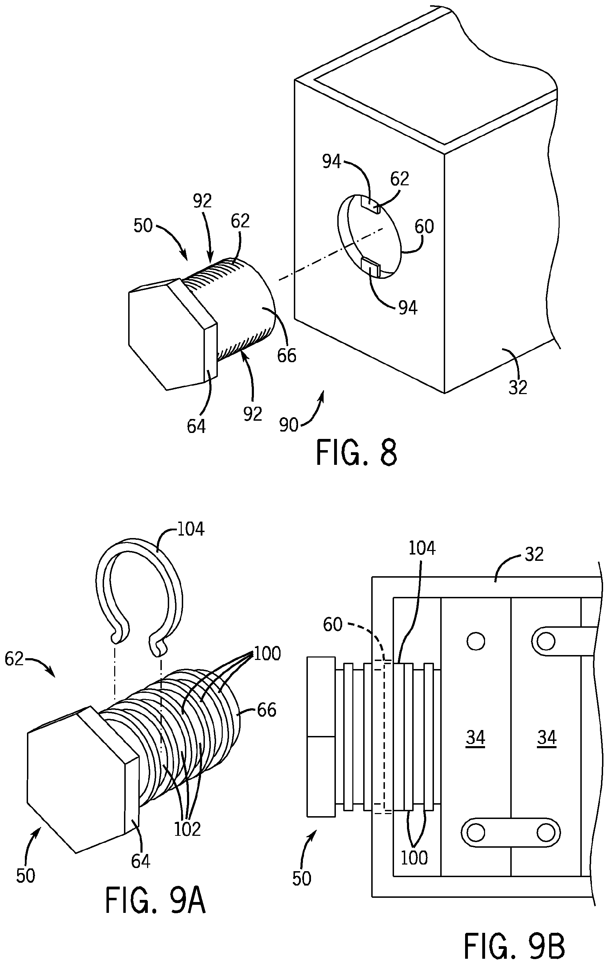

One alternative detention mechanism 62 according to the invention for holding the plug 50 in place within the casing 32 is a ratcheting system 90, as depicted in FIG. 8. For example, the body portion 66 of the plug 50 may include multiple rows of triangular teeth 92 that extend along the body portion 66 parallel to the axis for the plug 50. Each row of teeth 92 may interact with a pawl 94 disposed within the hole 60 in the casing 32. Using the ratcheting system 90, the plug 50 may only be able to translate axially into the hole 60, being fixed in position by the pawl 94. Accordingly, as the cells 34 begin to swell, the plug 50 may not back out of the hole 60, thereby applying compression to the cells 34.

In a different not-claimed embodiment, depicted in FIGS. 9A and 9B, the detention mechanism 62 may utilize ribs 100 and a snap-fit ring 102 to hold the plug 50 in place within the casing 32. As shown in FIG. 9A, multiple ribs 100 may radially project from the body 66 of the plug 50. Accordingly, the space between the ribs 100 may form trenches 102. The trenches 102 may accommodate a snap-fit ring 104. In FIG. 9B, the snap-fit ring 104 is shown disposed in one of the trenches 102, such that the body portion 66 of the plug 50 is extending a desired distance into the rectangular inner space 42 of the casing 32. In this way, the plug 50 may apply compression to the cells 34 as they begin to swell within the casing 32.

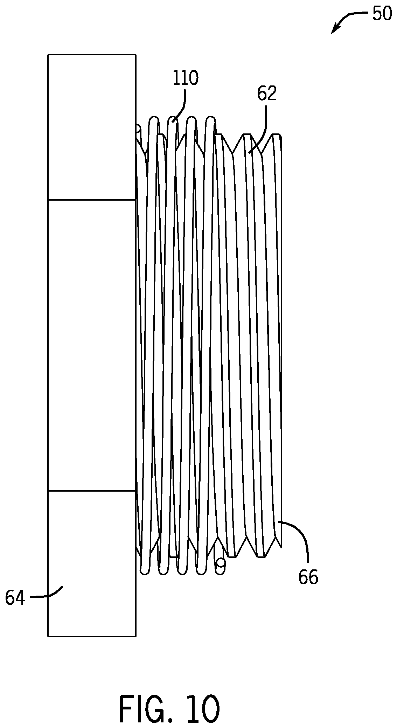

The plug 50 may incorporate additional features to determine how it applies compression to the cells 34. For example, as depicted in FIG. 10, the plug 50 may include a coil spring 110 to increase the compressive force applied to the cells 34 or allow limited movement of the cells 34 when they begin to expand. The coil spring 90 may fit between the inner surface of the casing 32 and the face of the end cell 34 or compression plate 80. The plugs 50 may include other components to facilitate compression, such as polymer gaskets, leaf springs, and other means of compression. Such compression components may be used when applying compression to the cells 34 is the primary goal of the housing system 30, as opposed to minimizing manufacturing costs and part count.

References herein to the positions of elements (e.g., "top," "bottom," "above," "below," etc.) are merely used to describe the orientation of various elements in the figures. It should be noted that the orientation of various elements may differ according to other embodiments, and that such variations are intended to be encompassed by the present disclosure.

## Claims

1. A housing system (30) for one or more battery cells, the housing system (30) comprising:
- a casing (32) forming a generally rectangular internal space (42), having opposing end pieces (38);
- two holes (60) each extending through one of the end pieces (38) in a central location of the end piece (38); and
- two plugs (50) each having a head portion and a body portion, wherein the body portion is configured to extend through one of the holes (60) to contact one of the battery cells, and the body portion has a detention mechanism (62) comprising a ratcheting mechanism having at least one set of triangular teeth disposed axially along the body portion of the plug (50) and having at least one pawl to engage the teeth disposed about the hole (50) of the end piece (38) of the casing (32) so as to fix its position to provide a compressive force on the battery cells.

2. The housing system (30) of claim 1,
wherein the casing (32) is configured to enclose multiple prismatic cells (34).

3. The housing system (30) of claim 1,
wherein the casing (32) is of single-piece construction.

4. The housing system (30) of claim 1,
wherein the casing (32) is formed of a plastic material.

5. The housing system (30) of claim 1,
wherein the plug (30) is configured to be placed within the hole (30) and have torque applied to the head portion to apply a compressive force to the battery cells within the casing (32).

6. The housing system (30) of claim 1,
wherein the plug (50) comprises a spring.

7. The housing system (30) of claim 1, having a cooling system (68) disposed below the casing (32), wherein the cooling system (68) has direct access to the bottom of the cells.

8. The housing system (30) of claim 1, having two rectangular compression plates (80), each located within the casing (32) adjacent to each end piece (38) and each compression plate (80) is positioned between with the body portion of the plug (50) and the multiple prismatic cells (34).

9. A battery module, comprising:
- the housing system (30) of any of the preceding claims; and
- a stack of battery cells, each being generally rectangular in shape and having a rigid container, the stack of battery cells fitting within the rectangular internal space of the casing (32).

10. An xEV, which is a vehicle which uses electric power for all or a portion of its vehicular motive force, and which includes the battery module of claim 9.

11. A method for applying compression to a stack of electrochemical cells comprising:
- providing the housing system (30) of any of claims 1 to 8;
- placing the stack of electrochemical cells within the rigid casing;
- positioning the plugs within holes in the rigid casing; and
- applying a desired amount of force to the plugs (50), wherein the plugs (50) apply a compressive force to an end of the stack of electrochemical cells within the casing (32).

## Patentansprüche

1. Gehäusesystem (30) für eine oder mehrere Batteriezellen, wobei das Gehäusesystem (30) Folgendes umfasst:
- eine einen allgemein rechteckigen Innenraum (42) bildende Hülle (32), die gegenüberliegende Endstücke (38) aufweist,
- zwei Öffnungen (60), die sich jeweils an einer mittigen Position eines der Endstücke (38) durch das Endstück (38) hindurch erstrecken, und
- zwei Zapfen (50), die jeweils einen Kopfabschnitt und einen Körperabschnitt aufweisen, wobei der Körperabschnitt dafür ausgelegt ist, sich durch eine der Öffnungen (60) hindurch zu erstrecken, um eine der Batteriezellen zu kontaktieren, und der Körperabschnitt einen Sperrmechanismus (62) aufweist, der einen Ratschenmechanismus umfasst, welcher mindestens einen Satz dreieckiger Zähne aufweist, die axial entlang des Körperabschnitts des Zapfens (50) angeordnet sind, und mindestens eine um die Öffnung (50) des Endstücks (38) der Hülle (32) herum angeordnete Sperrklinke aufweist, um mit den Zähnen in Eingriff zu treten, um dessen Position zu fixieren und eine Druckkraft auf die Batteriezellen bereitzustellen.

2. Gehäusesystem (30) nach Anspruch 1,
wobei die Hülle (32) dafür ausgelegt ist, mehrere prismenförmige Zellen (34) zu umschließen.

3. Gehäusesystem (30) nach Anspruch 1,
wobei die Hülle (32) einteilig konstruiert ist.

4. Gehäusesystem (30) nach Anspruch 1,
wobei die Hülle (32) aus einem Kunststoffmaterial gebildet ist.

5. Gehäusesystem (30) nach Anspruch 1,
wobei der Zapfen (30) dafür ausgelegt ist, in der Öffnung (30) platziert zu werden und ein auf den Kopfabschnitt ausgeübtes Drehmoment zu empfangen, um eine Druckkraft auf die Batteriezellen in der Hülle (32) auszuüben.

6. Gehäusesystem (30) nach Anspruch 1,
wobei der Zapfen (50) eine Feder umfasst.

7. Gehäusesystem (30) nach Anspruch 1, welches ein unterhalb der Hülle (32) angeordnetes Kühlsystem (68) aufweist, wobei das Kühlsystem (68) unmittelbaren Zugang zum Boden der Zellen besitzt.

8. Gehäusesystem (30) nach Anspruch 1, welches zwei rechteckige Druckplatten (80) aufweist, die sich jeweils angrenzend an jedes Endstück (38) in der Hülle (32) befinden, wobei jede Druckplatte (80) zwischen dem Körperabschnitt des Zapfens (50) und den mehreren prismenförmigen Zellen (34) positioniert ist.

9. Batteriemodul, umfassend:
- das Gehäusesystem (30) nach einem der vorhergehenden Ansprüche und
- einen Stapel Batteriezellen, die jeweils eine allgemein rechteckige Form aufweisen und einen starren Behälter besitzen, wobei der Batteriezellenstapel in den rechteckigen Innenraum der Hülle (32) passt.

10. Ein xEV, bei welchem es sich um ein Fahrzeug handelt, welches für seine Fahrzeugantriebskraft ganz oder teilweise elektrischen Strom verwendet, und welches das Batteriemodul nach Anspruch 9 umfasst.

11. Verfahren zum Ausüben von Druck auf einen Stapel elektrochemischer Zellen, umfassend:
- Bereitstellen des Gehäusesystems (30) nach einem der Ansprüche 1 bis 8,
- Platzieren des Stapels elektrochemischer Zellen in der starren Hülle,
- Positionieren der Zapfen in Öffnungen in der starren Hülle und
- Ausüben eines gewünschten Maßes an Kraft auf die Zapfen (50), wobei die Zapfen (50) eine Druckkraft auf ein Ende des Stapels elektrochemischer Zellen in der Hülle (32) ausüben.

## Revendications

1. Système de logement (30) pour une ou plusieurs cellule(s) de batterie, le système de logement (30) comprenant:
une enceinte (32) qui forme un espace interne essentiellement rectangulaire (42), et qui présente des pièces d'extrémité opposées (38);
deux trous (60) qui s'étendent chacun à travers une des pièces d'extrémité (38) en un endroit central de la pièce d'extrémité (38); et
deux bouchons (50) qui présentent une partie de tête et une partie de corps, dans lequel la partie de corps est configurée de manière à s'étendre à travers un des trous (60) afin d'entrer en contact avec l'une des cellules de batterie, et la partie de corps présente un mécanisme de retenue (62) qui comprend un mécanisme d'encliquetage comportant au moins un ensemble de dents triangulaires disposées axialement le long de la partie de corps du bouchon (50) et qui présente au moins un cliquet pour engager les dents disposées autour du trou (50) de la pièce d'extrémité (38) de l'enceinte (32) de manière à fixer sa position afin d'appliquer une force de compression aux cellules de batterie.

2. Système de logement (30) selon la revendication 1, dans lequel l'enceinte (32) est configurée de manière à envelopper de multiple cellules prismatiques (34).

3. Système de logement (30) selon la revendication 1, dans lequel l'enceinte (32) est de structure monobloc.

4. Système de logement (30) selon la revendication 1, dans lequel l'enceinte (32) est constituée d'un matériau plastique.

5. Système de logement (30) selon la revendication 1, dans lequel le bouchon (50) est configuré de manière à être placé à l'intérieur du trou (30), et un couple est appliqué à la partie de tête dans le but d'appliquer une force de compression aux cellules de batterie à l'intérieur de l'enceinte (32).

6. Système de logement (30) selon la revendication 1, dans lequel le bouchon (50) comprend un ressort.

7. Système de logement (30) selon la revendication 1, comprenant un système de refroidissement (68) qui est disposé en dessous de l'enceinte (32), dans lequel le système de refroidissement (68) a un accès direct à la base des cellules.

8. Système de logement (30) selon la revendication 1, présentant deux plaques de compression rectangulaires (80), chaque plaque étant située à l'intérieur de l'enceinte (32) à proximité de chaque pièce d'extrémité (38), et chaque plaque de compression (80) étant positionnée entre la partie de corps du bouchon (50) et les multiples cellules prismatiques (34).

9. Module de batterie, comprenant:
le système de logement (30) selon l'une quelconque des revendications précédentes; et
une pile de cellules de batterie, chaque cellule étant de forme essentiellement rectangulaire et présentant un conteneur rigide, la pile de cellules de batterie s'agençant à l'intérieur de l'espace interne rectangulaire de l'enceinte (32).

10. XEV, qui est un véhicule qui utilise du courant électrique pour la totalité ou pour une partie de sa force motrice de véhicule, et qui comprend le module de batterie selon la revendication 9.

11. Procédé pour appliquer une compression à une pile de cellules électrochimiques, comprenant les étapes suivantes:
fournir le système de logement (30) selon l'une quelconque des revendications 1 à 8;
placer la pile de cellules électrochimiques à l'intérieur de l'enceinte rigide;
positionner les bouchons à l'intérieur de trous prévus dans l'enceinte rigide; et
appliquer une quantité de force souhaitée aux bouchons (50), dans lequel les bouchons (50) appliquent une force de compression à une extrémité de la pile de cellules électrochimiques à l'intérieur de l'enceinte (32) .
